# EUROPÄISCHE PATENTSCHRIFT

(11) **EP 0 524 578 B1**
(45) Veröffentlichungstag und Bekanntmachung des Hinweises auf die Patenterteilung: **29.10.1997**
(21) Anmeldenummer: 92112368.3
(22) Anmeldetag: 20.07.1992
(51) Int. Cl.: B03B 9/06, H01J 9/00, C09K 11/01

(54) **Verfahren zum Aufarbeiten von Bildröhren aus Fernsehgeräten oder dgl.**
Method for treating television tubes or the like
Procédé pour le traitement de tubes de téléviseurs ou analogues

(30) Priorität: 25.07.1991 DE 4124595
(43) Veröffentlichungstag der Anmeldung: 27.01.1993
(73) Patentinhaber: REICHART RECYCLING GmbH, 50259 Pulheim (DE); Meul, Manfred, D-53578 Windhagen (DE); Ockenfels, Clemens, 53332 Bornheim (DE)
(72) Erfinder: Dichant, Gerhard, W-5010 Bergheim-Fliesteden (DE)
(74) Vertreter: Langmaack, Jürgen, Dipl.-Ing.

(56) Entgegenhaltungen:
- EP-A- 0 298 035
- AU-D- 4 822 272
- DD-B- 224 323
- DE-A- 3 901 842
- DE-A- 3 909 380
- US-A- 2 628 036

## Beschreibung

Die Erfindung betrifft ein Verfahren zum Aufarbeiten von Bildröhren aus Fernsehgeräten, Monitoren oder dgl.

Die Entsorgung von ausgedienten Fernsehern, Computer-Monitoren oder dgl. kann mit der Zunahme der jeweils anfallenden Mengen von derartigen Geräten, insbesondere aber wegen des hohen Anteils an umweltschädlichen Stoffen in derartigen Röhren, nicht mehr ungeordnet, beispielsweise durch einfaches Abwerfen auf eine Mülldeponie, vorgenommen werden.

Für die Entsorgung von Leuchtstoffröhren ist es aus EP-A-0 298 035 und DE-A-39 09 380 bekannt, die aufzuarbeitenden Röhren in ein Wasserbad einzuführen und in eingetauchtem Zustand zu zerkleinern, um hier die Freisetzung von umweltschädlichen Stäuben, die aus der Beschichtung stammen, zu verhindern. Ein gezieltes Waschen des zerkleinerten Glasschrotts ist hierbei nicht vorgesehen und auch wegen der Dünnwandigkeit der Glaskörper derartiger Leuchtstoffröhren nicht möglich. Es erfolgt nur eine grobe Beseitigung der beim Zerkleinerungsvorgang sich ablösenden Beschichtungsteile. Der verbleibende Rest muß mit dem Glas als Sondermüll deponiert werden.

Aus DD-A-224 323 ist ein Verfahren zur Aufarbeitung von Leuchtstoffröhren zu entnehmen, bei dem die Röhren trocken in einem Prallbrecher oder einer Hammermühle zerkleinert werden und anschließend das zerkleinerte Glas in einem ultraschallaktivierten Tauchbad gewaschen wurden, wobei es hier das Ziel des Verfahrens war, einerseits die in der Beschichtung enthaltenen Rohstoffe und andererseits das Glas als Rohstoff zurückzugewinnen. Maßnahmen zur Vermeidung der Staubentwicklung bei der Zerkleinerung sind nicht vorgesehen.

Aus der US-A-2 628 036 ist ferner ein Verfahren zur Entsorgung von Leuchtstoffröhren bekannt, bei dem die Leuchtstoffröhren in einer Prallmühle mit schnellumlaufendem Schlagrotor zerkleinert werden und durch die Eindüsung von Wasser die Staubbildung unterbunden werden soll. Eine Ablösung der Beschichtung über das Maß hinaus, das durchdie Ablösung bei der Zerkleinerung erfolgt, ist bei diesem Verfahren nicht möglich, so daß der zerkleinerte Glasanteil noch in erheblichem Maße durch die Beschichtungsstoffe verunreinigt ist. Zum Absaugen des bei der Zerkleinerung von Leuchtstoffröhren frei werdenden Gases ist bei der dort beschriebenen Anlage ein Exhauster vorgesehen, der an die Prallmühle angeschlossen ist. Der Exhauster zieht Luft über den geneigten Auslaß der Prallmühle durch die Prallmühle in einen Kamin. Durch den Exhauster werden unweigerlich auch berylliumhaltige Stäube mit angezogen da die Berieselung mit Wasser nicht ausreicht, um alle entstehenden Stäube vollständig niederzuschlagen. Außerdem entstehen Anbackungen im Abzug, die irgendwann entfernt werden müssen. Eine staubfreie Zerkleinerung, bei welcher die Umwelt nicht mit giftigen Substanzen belastet wird, ist nach diesem Verfahren nicht möglich.

Aus der DE-A-39 01 842 ist ein Verfahren zur Zerlegung von Bildröhren und der Reinigung der gewonnenen Glasteile bekannt. Das Verfahren sieht vor, bestimmte Teile der Bildröhre mittels einer Diamantscheibe vom Bildröhrenglas zu trennen und die Beschichtungen durch Abstrahlen mit Sand oder Wasser unter Hochdruck zu entfernen. Das Zerlegen der Bildröhren ist hier sehr aufwendig und muß für jede Bildröhre in einem separaten Arbeitsvorgang erfolgen.

Der Erfindung liegt die Aufgabe zugrunde, ein Verfahren zu schaffen, das eine Entsorgung der Bildröhren praktisch ohne die Belastung der Umwelt durch schädliche Stoffe ermöglicht.

Diese Aufgabe wird erfindungsgemäß mit den Verfahrensschritten des Anspruchs 1 gelöst. Dadurch daß im ersten Verfahrensschritt die Bildröhren nur aufgebrochen werden, ergibt sich zum einen die Möglichkeit, daß der Innenraum der Bildröhre mit seiner Beschichtung freigelegt wird, die Bestandteile enthält, die als umweltschädlich angesprochen werden müssen. Durch die Anwesenheit der Flüssigkeit wird verhindert, daß die sich beim Aufbrechen von der Glasoberfläche lösenden Teile der Beschichtung in Staubform in die Atmosphäre gelangen können. Die sich ablösenden Bestandteile werden vielmehr durch die Flüssigkeit gebunden und können so aufgefangen werden. Durch die Ausbreitung in einer losen, vorzugsweise dünnen Schicht, ist es möglich, durch zusätzliche Flüssigkeits- bzw. Wasserzugaben die Beschichtung weitgehend abzuwaschen. Zweckmäßig ist hierbei die Bedüsung der losen Schicht mittels Hochdruckdüsen. Da die relativ großen Bruchstücke offenliegen, sind sie unmittelbar dem Druckwasser ausgesetzt. Die Druckdüsen führen auch zu einer Umschichtung, so daß alle Flächen dem Druckwasser ausgesetzt sind. Durch den Waschprozeß werden nicht nur die beim Aufbrechen gelösten Teile der Beschichtung, sondern auch noch die an den zerkleinerten Glasstücken haftenden Beschichtungsteile nahezu vollständig abgewaschen, so daß die Beschichtungsteile anschließend zusammen mit dem Waschwasser von dem dann praktisch reinen Glasanteil getrennt werden können. Der so gewonnene grobe Glasschrott kann dann wieder verwendet oder deponiert werden. Infolge der erheblichen Volumenreduzierung kann dann das zerkleinerte und von seiner umweltschädlichen Beschichtung befreite Glas deponiert werden. Da es sich hierbei jedoch um ein gehärtetes Glas mit hoher Druckfestigkeit handelt, kann dieser "Glassplit" für Bauzwecke - beispielsweise als Tragschicht für Pflasterungen - verwendet werden.

Die Röhren können vorher von den äußeren Metallteilen befreit werden.

Das bei dem Aufbrechen der Bildröhren vorgesehen ist, daß die Flüssigkeit die Brecheratmosphäre in Tropfenform als Nebel und/oder Regen ausfüllt, hat zum einen den Vorteil, daß beispielsweise bei der Verwendung eines rotierenden Behälters die Schlagwirkung nicht gedämpft wird, zum anderen aber auch den Vorteil, daß im Moment des Aufbrechens einer Bildröhre in Staubform freigesetzte Beschichtungsteile sofort niedergeschlagen werden.

Besonders zweckmäßig ist es jedoch, wenn die Flüssigkeit in Form eines Nebels oder Regens in die Aufgabe- und/oder Austragsöffnung des Behälters eingedüst wird, so daß hier zuverlässig beim Aufbrechen freiwerdende Teile der Beschichtung gebunden werden und nicht mehr in die Atmosphäre austreten können. Die Düsengröße sollte hierbei so gewählt werden, daß die sich bildenden Tropfen nicht als Aerosol verweht werden können. Zweckmäßig ist hierbei eine Prallzerstäubung, so daß relativ große Düsenöffnungen verwendet werden können, deren Strahlen auf eine Prallfläche treffen und so die Flüssigkeit zerstäubt wird. Hierdurch ist es möglich, im internen Kreislauf das Prozeßwasser zu verwenden, wobei nur eine grobe Filtrierung notwendig ist.

Dadurch daß das Ausbreiten des zerlegten Materials in einer losen Schicht mittels einer vibrierenden geneigten Fläche erfolgt - hierzu kann beispielsweise ein geneigter Rütteltisch oder vorzugsweise eine Schwingrinne oder dergleichen verwendet werden - werden die zu waschenden Flächen der Glasbruchstücke freigelegt und können so in einfacher Weise von der Waschflüssigkeit unter Hochdruck ausgesetzt werden. Falls die Röhren ohne vorheriges Entfernen der Metallteile gebrochen werden, werden hierdurch zum einen die herausgelösten Metallteile freigelegt und zum anderen unter dem Einfluß der Vibrationen dafür Sorge getragen, daß lose Glasstücke noch aus den Metallteilen herausgeschlagen werden und somit die Metallteile weitgehend glasfrei mit Hilfe eines Magneten herausgehoben werden können.

Dadurch daß bei dem an das zerlegende Aufbrechen anschließenden Waschvorgang die Waschflüssigkeit mit hohem Strahldruck auf das zerkleinerte Material aufgebracht wird, wird erreicht, daß unter der Einwirkung des Strahldrucks der über mehrere Hochdruckdüsen auf die lose Beschichtung bzw. Hauptwerk aufgebrachten Waschflüssigkeit die an den Glasteilen anhaftende Beschichtung abgewaschen wird, wobei gleichzeitig die Glasteile durchwirbelt und gegeneinander gerieben werden, so daß über die mechanische Einwirkung die Beschichtung nahezu vollständig vom Glas getrennt und mit der Waschflüssigkeit ausgetragen wird.

Da Bildröhren erhebliche Größenunterschiede aufweisen können, eine Vorsortierung nach Größen jedoch zusätzliche Kosten verursachen würde, ist in einer vorteilhaften Ausgestaltung der Erfindung vorgesehen, daß das Aufbrechen der Bildröhren durch Fallwirkung erfolgt, beispielsweise durch Aufgabe in einen rotierenden Behälter. Mit Hilfe dieser Verfahrensweise ist es möglich, Bildröhren unterschiedlichster Größe unter der Einwirkung des Eigengewichts beim Fall aufzubrechen. Gibt man die Bildröhren in einen rotierenden Behälter, dann werden die in Folge der Rotation aufgehobenen Bildröhren und Bildröhrenteile beim freien Fall nicht nur selbst der Schlagwirkung ausgesetzt, sondern üben auch auf die im Bodenbereich des Behälters liegenden Teile eine Schlagwirkung aus, so daß sich ein weitgehender Aufschluß, d. h. eine einwandfreie Lösung der metallischen Bestandteile von den Glasteilen ergibt, ohne daß die metallischen Bestandteile nennenswert verformt werden, was der anschließenden Aussonderung mit Hilfe eines Magneten nachteilig wäre. Durch Agitation im Wasser wird auch die Beschichtung von Glas gelöst. Durch entsprechende Hubeinrichtungen bei einem rotierenden Behälter kann erreicht werden, daß eine geringe Wasserfüllung im Bodenbereich des Behälters zusammen mit den zu zerkleinernden Bildröhren und Bildröhrenteilen angehoben wird und dann beim Fall in den Behälterraum entsprechend "abregnet".

Das Aufbrechen der Bildröhren kann auch durch die Schneidwalzen einer Schneidwalzenmühle erfolgen.

Ebenfalls ist eine Zerkleinerung durch einen Backenbrecher mit großer Maulweite oder ähnlichen Vorrichtungen durchführbar.

In zweckmäßiger Ausgestaltung des erfindungsgemäßen Verfahrens ist ferner vorgesehen, daß die auf das Aussondern der Metallteile folgende Zerkleinerung als Schlagzerkleinerung durchgeführt wird. Dies kann beispielsweise mit Hilfe einer Hammermühle durchgeführt werden. Die Verwendung einer Schlagzerkleinerung hat hierbei den Vorteil, daß die beim Aufbrechen entstehenden groben Glasstücke in einem Durchlauf eine praktisch "kubische Kornform" erhalten, die eine Weiterverwertung aus Zuschlagstoff - beispielsweise als Glassplitt für Betonformsteine - ermöglichen.

Der Waschvorgang kann in Form einer Waschstraße vorgenommen werden, in der das aufgebrochene oder zerkleinerte Material in dem aus der Zerkleinerungsvorrichtung abgezogenen Wasser zunächst agitiert und anschließend beim Herausheben mit Klarwasser abgespritzt wird. Das zerkleinerte Material kann dann durch Abtropfen, Schleudern oder dergleichen vom Wasser getrennt und abgezogen werden. Die Waschflüssigkeit wird zweckmäßigerweise im Kreislauf gefahren, wobei hier eine Wasseraufbereitung vorzusehen ist, in der die Beschichtung aus dem Waschwasser usw.
durch Sedimentation, Dekantation oder auch Filtration entfernt wird, so daß für die Bedüsung im Bereich der Zerkleinerung und für die Hochdruckbedüsung im Bereich der Wäsche immer ein weitgehend feststofffreies Wasser zur Verfügung steht. Der aus dem Waschwasser abgetrennte aus der Beschichtung stammende Feststoff muß dann als Sonderabfall entsprechend entsorgt werden.

Der Waschvorgang kann auch in der Weise durchgeführt werden, daß das zerkleinerte Material als Haufwerk in zumindest angefeuchtetem Zustand durchmischt bzw. agitiert wird und anschließend mit klarer Flüssigkeit abgewaschen und von der Flüssigkeit getrennt wird. Die Durchmischung des zerkleinerten Materials als Haufwerk hat den Vorteil, daß an den Glasteilen noch fest anhaftende Beschichtungsreste durch die mechanische Einwirkung derGlasteile aufeinander weitestgehend gelöst werden, so daß diese mit Flüssigkeit abgeschwemmt werden können. Der gewaschene - je nach Zerkleinerungsgrad - Glasschrott oder Glassplitt enthält somit praktisch keine Beschichtungsreste mehr.

Die Erfindung wird anhand schematischer Fließbilder von Ausführungsbeispielen erläutert. Es zeigen:
- Fig. 1: eine Anlage mit Feinzerkleiner,
- Fig. 2: eine modifizierte Anlage.

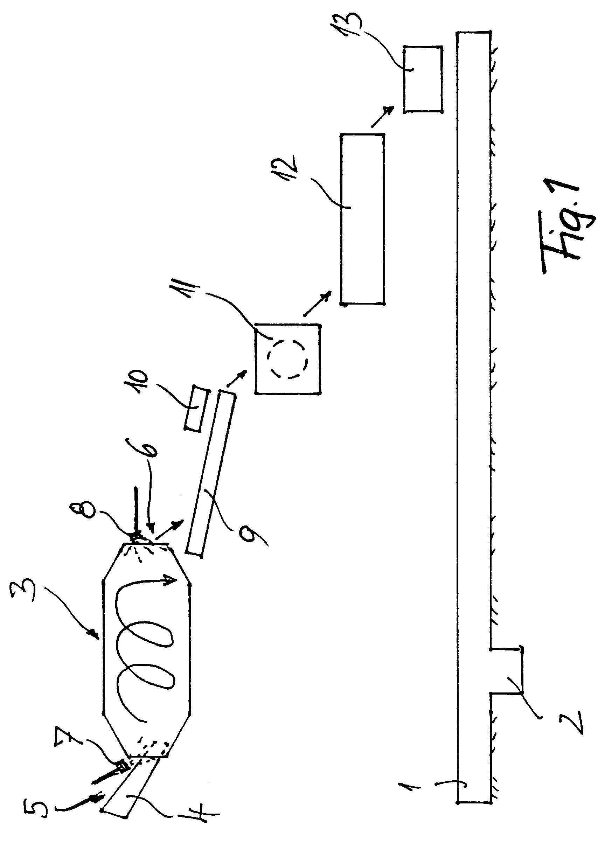

Nach Fig. 1 ist die Anlage ist in einer Bodenwanne 1 aufgestellt, so daß austretende verunreinigte Flüssigkeitsmengen aufgefangen und gezielt über einen Pumpensumpf 2 abgesaugt werden können. Die Anlage besteht im wesentlichen aus einem Vorbrecher 3, in den über eine Aufgaberutsche 4 die zu zerlegenden Bildröhren aufgegeben werden können. Bei dem dargestellten Ausführungsbeispiel besteht der Vorbrecher 3 aus einer rotierenden Trommel, die im Innenraum mit Hubleisten versehen ist, so daß über die Aufgabeöffnung 5 in den Innenraum gelangende Bildröhren infolge der Drehung angehoben und dann im freien Fall in die bereits vorhandene Füllung herunterfallen können. Die Hubleisten sind jeweils zweckmäßig an der Trommelinnenwandung wendelförmig angeordnet und zwar so, daß sie in Verbindung mit der vorgegebenen Drehrichtung der Trommel die Trommelfüllung in Richtung auf die Austragsöffnung 6 weiter-transportieren. Die Trommel kann, wie schematisch dargestellt, mit konischen Enden versehen sein, oder aber auch als Zylinder ausgebildet sein und geneigt gelagert sein, wobei dann der Transport im Inneren des Rohres durch die Neigung bewirkt wird.

Durch Düsen 7 im Bereich der Aufgabeöffnung 5 und Düsen 8 im Bereich der Austragsöffnung 6 wird ein Wasservorhang erzeugt, der sicherstellt, daß die beim Aufbrechen der Bildröhren freiwerdenden Teile der Beschichtung nicht nach außen treten können. Statt einer derartigen Freifallzerkleinerung kann der Vorbecher 3 auch in Form eines Backenbrechers oder eines Walzenbrechers oder ähnlichen Brechervorrichtungen ausgebildet sein, durch die sichergestellt ist, daß nur eine grobe zerlegende Zerkleinerung stattfindet, die die metallischen Bestandteile einer Bildröhre nur wenig angreift. Das Wasser benetzt zugleich die Oberfläche der Bruchstücke, so daß freiwerdende Partikel der Beschichtung gebunden werden, und zwar an den Bruchstücken und/oder in der sich in der Trommel sammelnden Flüssigkeit. Die Flüssigkeit wird ebenfalls aus der Trommel ausgetragen.

An den Vorbrecher 3 schließt sich ein Rütteltisch 9 an, auf dem das zerlegte Material in einer losen Schicht ausgebreitet wird, so daß über einen Magneten 10 im Endbereich des Rütteltisches 9 die ferro-magnetischen Bestandteile ausgehoben und vom Glasanteil getrennt werden können. Der Magnet 10 kann hierbei als Trommel- oder Bandmagnet, wie in der Zeichnung dargestellt, ausgebildet sein. Das Glas kann hierbei über den Rütteltisch freigeführt werden, da das anhaftende Wasser ein Freisetzen von Beschichtungsteilen in Staubform verhindert. Die über den Magneten 10 abgesonderten Metallteile werden zweckmäßigerweise vor der Abgabe zur Weiterverwertung noch mit klarem Wasser abgebraust, so daß auch an den abzugebenden metallischen Bestandteilen praktisch keine Bestandteile der Beschichtung mehr anhaften.

Vom Rütteltisch 9 wird dann der verbleibende Glasanteil einer Zerkleinerungseinrichtung 11 - beispielsweise einer Hammermühle - aufgegeben. Die an dem Glas haftende Flüssigkeit reicht in der Regel aus, um hier ein staubförmiges Freisetzen von Beschichtungsanteilen zu verhindern. Wegen der starken Ventilation einer Hammermühle ist es jedoch zweckmäßig, wenn diese im Bereich der Aufgabeöffnung mit einem Wasservorhang versehen wird, um hier das Austreten der mit Beschichtungsteilen konterminierten Flüssigkeit in Form von Aerosolen oder Nebeln, die von der Luftbewegung weggetragen werden können, vermieden wird.

Das aus der Zerkleinerungseinrichtung 11 austretende körnige Glas wird anschließend in einer Wascheinrichtung 12 mit Hilfe einer Waschflüssigkeit, insbesondere Wasser, das über hier nicht näher dargestellte Hochdruckdüsen zugeführt wird, gewaschen, so daß unter der mechanischen Wirkung der Wasserstrahlen und auch unter der mechanischen Einwirkung der einzelnen Glaskörner aufeinander, die Beschichtung vollständig abgeschwemmt werden kann. Das granulierte Glas wird aus der Wascheinrichtung 12 abgezogen und in einem Container 13 gesammelt, wobei der Container 13 zweckmäßigerweise so ausgebildet ist, daß er ein vollständiges Abtropfen der Waschflüssigkeit ermöglicht. Die Wascheinrichtung 12 ist hierbei vorzugsweise so ausgebildet, daß im Endbereich der Materialstrom ausschließlich mit klarem Wasser beaufschlagt wird, wobei in diesem Endwaschbereich das Wasser mit geringem Druck zugeführt wird, um hier ein Abschwemmen an den Glaskörnern anhaftender, losgelöster Beschichtungsbestandteile zu bewirken.

Die Wascheinrichtung kann auch so ausgebildet sein, daß das aus der Zerkleinerungseinrichtung austretende körnige Glas als Haufwerk zunächst nur ein wenig Wasser in einem Behälter mechanisch agitiert wird, so daß die einzelnen Glaskörner aufeinander reiben und hierbei etwaige noch fest anhaftende Beschichtungsreste "abschaben". Bei einem satzweisen Arbeiten kann dann das Haufwerk mit klarer Flüssigkeit abgebraust werden, wobei der Behälter im Bodenbereich mit öffenbaren Flüssigkeitsablässen zu versehen ist. Bei einer Behandlung im kontinuierlichen Durchlauf muß eine entsprechende Waschstrecke nachgeschaltet werden, die eine Trennung des Glases von der Flüssigkeit erlaubt.

Die sich in der Auffangwanne 1 sammelnde Flüssigkeit sowie die aus den einzelnen Bearbeitungsstufen gezielt abgezogenen Waschflüssigkeitsmengen werden dann einer hier nicht näher dargestellten Filtrationseinrichtung zugeführt, in der die abgewaschenen Beschichtungsmassen vom Wasser getrennt und dann gegebenenfalls nach entsprechender Entwässerung als Sonderabfall abgepackt werden.

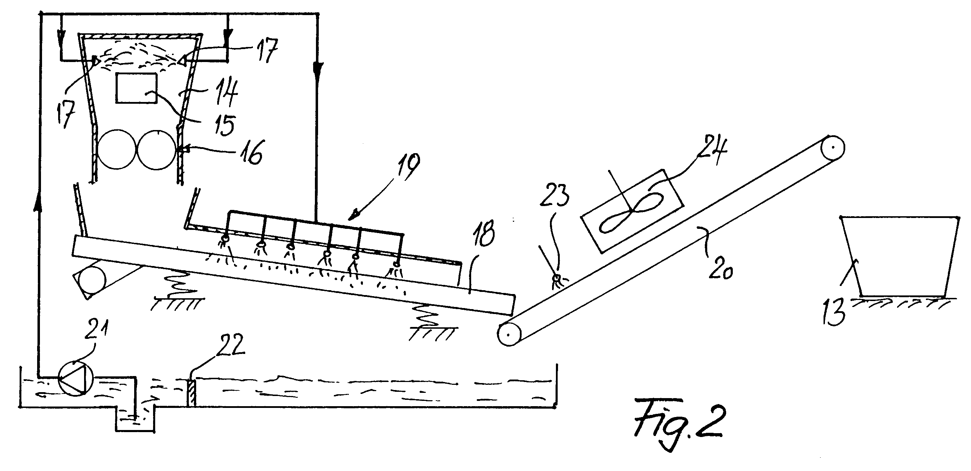

In Fig. 2 ist eine abgewandelte Anlage dargestellt, bei der auf eine Feinzerkleinerung verzichtet ist, bei der jedoch die mit den Röhren verbundenen Metallteile vorher abgetrennt worden sind.

Der Vorbrecher 3 besteht hier aus eine Schneidwalzenmühle mit einem geschlossenen Aufgabeschacht 14, der eine seitliche Aufgabeöffnung 15 aufweist, die mit ausreichendem Abstand, beispielsweise 1 m, oberhalb der Schneidwalzen 16 in einer Schachtwandung angeordnet ist. Die Aufgabeöffnung ist durch eine innenliegende Gummischürze abgedeckt. Oberhalb der Aufgabeöffnung sind Düsen 17 angeordnet, die den Brecherraum mit einem Flüssigkeitsnebel ausfüllen.

Unterhalb des Vorbrechers 3 ist ein Abzug für das aufgebrochene Material in Form einer Schwingrinne 18 angeordnet. Diese ist zumindest über einen Teil ihrer Länge abgedeckt. In diesem Bereich sind Hochdruckdüsen 19 angeordnet, deren Strahlen gegen den Rinnenboden gerichtet sind. Der Glasschrott wird vom Förderband 20 dann in den Behälter 13 abgeworfen.

Das Austragsende der Schwingrinne 18 wirft den gewaschenen Glasschrott auf ein Trogförderband 20 mit Bodenrinne ab. Infolge der Neigung kann das am Glasschrott anhaftende Überschußwasser zusammen mit dem aus der Schwingrinne 18 auslaufenden Wasser in die Bodenwanne 1 ablaufen.

Über eine Hochdruckpumpe 21 wird das aufgefangene Wasser als Prozeßwasser im Kreislauf zu den Düsen 17 und 19 geführt. Durch eine entsprechende Gestaltung der Bodenwanne 1, beispielsweise durch ein Bodenwehr 22 im Bereich des Pumpensumpfes 1, kann eine weitgehende Sedimentation der Feststoffe aus der Flüssigkeit erreicht werden. Durch diese Kreislaufführung kann der Wasserbedarf reduziert werden.

Oberhalb des Förderbandes 20 können Düsen 23 angeordnet sein, über die mit Klarwasser der Glasschrott noch abgebraust wird. Über ein Gebläse 24, dessen Strahlrichtung vorzugsweise gegen die Förderrichtung des Förderbandes 20 geneigt ist, kann das anhaftende Wasser weitgehend abgeblasen werden.

Die Fallhöhe zwischen der Aufgabeöffnung 15 und der Schneidwalzen 16 reicht aus, um die Bildröhren so weit aufzubrechen, daß die Zerkleinerung durch die Schneidwalzen möglich ist. Der vom Förderband 20 abgeworfene, gereinigte grobe Glasschrott kann entweder durch Einschmelzen, wenigstens zum Teil, wiederverwertet oder auch deponiert werden. Eine weitere Zerkleinerung zu Glassplitt, beispielsweise in einer Hammermühle, ist ebenfalls möglich. Dies kann jedoch trocken erfolgen, da der grobe Glasschrott gereinigt ist. Vorteilhaft ist jedoch diese weitere Zerkleinerung in noch feuchtem Zustand, um eine Staubentwicklung zu vermeiden, die aus eingebrannten Beschichtungen herrühren kann.

Im Bereich der Düsen 19 werden zweckmäßigerweise bewegbare Bürsten, beispielsweise rotierende Bürsten, angeordnet, die auf das auf dem Rinnenboden in einer Schicht ausgebreitete aufgebrochene Material einwirken. Zweckmäßigerweise sind auf dem Rinnenboden in etwa quer zur Durchlaufrichtung verlaufende Stauelemente für das Material vorgesehen. Bei einer Arbeitsweise ohne Bürsten bewirken die Stauelemente in Verbindung mit der Schwingbewegung ein Umwenden der Glasteile. Bei einer Arbeitsweise mit Bürsten wird der notwendige Rückhalt gegeben, damit die Bürsten die Teile überstreichen können. Auch kann bei entsprechender Ausgestaltung ein Umwenden erreicht werden.

## Patentansprüche

1. Verfahren zum Aufarbeiten von Bildröhren aus Fernsehgeräten, Monitoren und dergleichen, bei welchem die Bildröhren in Anwesenheit einer Flüssigkeit aufgebrochen und anschließend gewaschen werden, dadurch gekennzeichnet, daß die Flüssigkeit in Tropfenform, als Nebel und/oder Regen die Atmosphäre des Brecherraums ausfüllt, daß das Aufbrechen der Bildröhren als grobzerlegendes Aufbrechen ohne nennenswerte Verformung der metallischen Bestandteile erfolgt, daß das aufgebrochene Material in einer losen Schicht mittels einer vibrierenden, geneigten Fläche zum Waschen ausgebreitet wird und daß zum Waschen die Waschflüssigkeit mit derart hohem Strahldruck auf das aufgebrochene Material aufgebracht wird, daß dieses durchgewirbelt und gegeneinander gerieben wird.

2. Verfahren nach Anspruch 1, dadurch gekennzeichnet, daß das Aufbrechen der Bildröhren durch Fallwirkung durch Aufgabe in einem rotierenden Behälter erfolgt.

3. Verfahren nach Anspruch 1, dadurch gekennzeichnet, daß das Aufbrechen durch die Schneidwalzen einer Schneidwalzenmühle erfolgt.

4. Verfahren nach einem der Ansprüche 1 bis 3, dadurch gekennzeichnet, daß das Aufbrechen durch einen Backenbrecher erfolgt.

5. Verfahren nach einem der Ansprüche 1 bis 4, dadurch gekennzeichnet, daß aus dem in einer losen Schicht ausgebreiteten aufgebrochenen Material Metallteile ausgesondert werden, vorzugsweise durch die Einwirkung eines Magnetfeldes.

6. Verfahren nach einem der Ansprüche 1 bis 5, dadurch gekennzeichnet, daß das aufgebrochene gewaschene Material einer weiteren Zerkleinerung unterworfen wird.

7. Verfahren nach einem der Ansprüche 1 bis 6, dadurch gekennzeichnet, daß die Zerkleinerung als Schlag- oder Schneidzerkleinerung durchgeführt wird.

8. Verfahren nach einem der Ansprüche 1 bis 7, dadurch gekennzeichnet, daß das zerkleinerte Material in zumindest angefeuchtetem Zustand als Haufwerk mechanisch agitiert wird.

9. Verfahren nach einem der Ansprüche 1 bis 8, dadurch gekennzeichnet, daß zumindest das zerlegte und/oder das aufgebrochene Material in Anwesenheit von Flüssigkeit mittels bewegter Bürsten abgereinigt wird.

## Claims

1. A method for treating picture tubes from television sets, monitors and the like, in which the picture tubes are broken up in the presence of a liquid and then are washed, characterised in that the liquid fills the atmosphere of the breaker space in drop form, as a mist and/or rain, that the breaking-up of the picture tubes is effected as coarse breaking-up without significant deformation of the metallic constituents, that the material broken up is spread out for washing in a loose layer by means of a vibrating, inclined surface and that for washing the washing liquid is applied to the broken-up material at such a high jet pressure that the pieces of material are swirled around and rubbed against one another.

2. A method according to Claim 1, characterised in that the breaking-up of the picture tubes is effected by a falling action by charging into a rotating container.

3. A method according to Claim 1, characterised in that the breaking-up is effected by the cutting rollers of a cutting roller mill.

4. A method according to one of Claims 1 to 3, characterised in that the breaking-up is effected by a jaw crusher.

5. A method according to one of Claims 1 to 4, characterised in that metal pieces are separated out of the broken-up material which is spread in a loose layer, preferably by the action of a magnetic field.

6. A method according to one of Claims 1 to 5, characterised in that the broken-up washed material is subjected to further crushing.

7. A method according to one of Claims 1 to 6, characterised in that the crushing is effected as beating or cutting crushing.

8. A method according to one of Claims 1 to 7, characterised in that the crushed material in an at least slightly moistened state is mechanically agitated as a heap.

9. A method according to one of Claims 1 to 8, characterised in that at least the crushed and/or the broken-up material is cleaned off in the presence of liquid by means of moving brushes.

## Revendications

1. Procédé pour le retraitement des tubes électroniques de téléviseurs, moniteurs et appareils analogues, dans lequel les tubes électroniques sont brisés en présence d'un liquide et sont ensuite lavés, caractérisé en ce que le liquide contenu dans l'atmosphère de l'enceinte du broyeur est introduit sous forme de gouttelettes, sous forme de brouillard et/ou de pluie, en ce que les tubes électroniques sont brisés sous l'action d'un concassage grossier sans déformation notable des composants métalliques, en ce que les débris de matériau sont étalés à l'aide d'une surface vibrante inclinée pour former une couche en vrac, qui pourra être lavée, et en ce que le liquide nécessaire pour le lavage est injecté sur les débris de matériau avec une pression de jet élevée telle que les débris sont mis en mouvement et frottent les uns contre les autres.

2. Procédé selon la revendication 1, caractérisé en ce que les tubes électroniques sont brisés sous l'effet de leur chute à l'intérieur d'un récipient animé d'un mouvement de rotation.

3. Procédé selon la revendication 1, caractérisé en ce que les tubes électroniques sont brisés par les meules de broyage d'un broyeur à meules.

4. Procédé selon l'une des revendications 1 à 3, caractérisé en ce que les tubes électroniques sont brisés par un broyeur à mâchoires.

5. Procédé selon l'une des revendications 1 à 4, caractérisé en ce que les débris de matériau, étalés sous forme d'une couche en vrac, sont triés pour isoler, de préférence sous l'effet d'un champ magnétique, les composants métalliques.

6. Procédé selon l'une des revendications 1 à 5, caractérisé en ce que les débris de matériau lavés subissent un broyage ultérieur.

7. Procédé selon l'une des revendications 1 à 6, caractérisé en ce que le broyage exécuté est un broyage par chocs ou par fendage.

8. Procédé selon l'une des revendications 1 à 7, caractérisé en ce que le matériau broyé, étalé en vrac à l'état au moins humide, est agité par voie mécanique.

9. Procédé selon l'une des revendications 1 à 8, caractérisé en ce qu'au moins les matériaux broyé et/ou brisé sont nettoyés en présence d'un liquide à l'aide de brosses en mouvement.
